# EUROPÄISCHE PATENTANMELDUNG

(11) **EP 1 669 159 A1**
(43) Veröffentlichungstag der Anmeldung: **14.06.2006**
(21) Anmeldenummer: 04405758.6
(22) Anmeldetag: 07.12.2004
(51) Int. Cl.: B23K 26/38, B23K 26/14, B23K 26/12, B23K 26/42, B23K 26/06, F23D 14/56

(54) **Bearbeitungsdüse zum Laserschneiden mir einer über den Düsenkörper hinausragenden Düsenhülse, Laserbearbeitungsvorrichtung und Laserbearbeitungsverfahren mit der entsprechenden Bearbeitungsdüse**

(71) Anmelder: Bystronic Laser AG, CH-3362 Niederönz (CH)
(72) Erfinder: Dohnke, Ina, Dr., 3013 Bern (CH); Marbacher, Franz, 3073 Gümligen (CH); Imboden, Ernest, 4556 Steinhof (CH); Comps, Justin, 5200 Brugg (CH)
(74) Vertreter: EGLI-EUROPEAN PATENT ATTORNEYS

(57) **Zusammenfassung**

Um bei einer Laserbearbeitungsmaschine, insbesondere bei einer Laserschneidmaschine, die Bearbeitung eines Werkstückes (5) dahingehend zu verbessern, so dass eine Verringerung des Prozessgasverbrauches, der Menge des ausströmenden Prozessgases, eine Verringerung des Prozessgasdruckes oder/und eine Steigerung der Schnittgeschwindigkeit oder/und eine bessere Schnittqualität erzielt wird, wird vorgeschlagen, über einen Düsenkörper (1) eine auf das Werkstück (5) nahezu absenkbare Düsenhülse (3) aufzusetzen, die mit dem Düsenkörper (1) und mit der Oberfläche des zu bearbeitenden Werkstückes (5) ein mit Prozessgas ausgefülltes Volumen ausbilden kann. In einer besonderen Ausführungsform der Erfindung wird vorgeschlagen, die Düsenhülse (3) axial verschiebbar auszubilden und die axiale Position der Düsenhülse (3) allenfalls steuerbar auszugestalten.

## Beschreibung

Die vorliegende Erfindung betrifft eine Bearbeitungsdüse zum Laserschneiden, eine Laserbearbeitungsvorrichtung und ein Laserbearbeitungsverfahren mit einer speziellen Bearbeitungsdüse, insbesondere der nachfolgend beschriebenen Gattung.

Beim Vorgang des Schneidens mit einem Laserstrahl - vorzugsweise im Infrarotbereich, nämlich im fernen Infrarotbereich eines CO₂-Lasers oder im nahen Infrarotbereich zum Beispiel eines Nd-YAG-Lasers - wird der Laserstrahl üblicherweise durch eine Düse gerichtet, durch die auch ein Schneidgas auf die zu schneidende Oberfläche geleitet wird. Das bei dem Bearbeitungsverfahren des Laserschneidens als Schneidgas bezeichnete Prozessgas dient dem Austreiben des hauptsächlich flüssigen Materials aus der im Bearbeitungsprozess entstehenden Schnittfuge. Die Qualität einer Laserschnittfläche wird wesentlich durch die Einstellung geeigneter Prozessgasströmungen bestimmt. Eine gute Qualität der Schnittfuge ist durch eine geringe und feine Riefenstruktur, durch geringe Rauheit über die gesamte bearbeitete Werkstückfläche, durch fehlenden Grat oder geringe Bartbildung, durch fehlende Unregelmässigkeiten, durch eine gerade Schnittspaltform mit geringen Rechtwinkligkeits- und Neigungstoleranzen gekennzeichnet.

Ein solches - unter anderem auch als Schutzgas zur Minimierung und Verhinderung von Partikelablagerungen auf den optischen Elementen der Laserstrahlführung verwendetes - Prozessgas wird üblicherweise Stickstoff oder ein anderes inertes Gas oder Gasgemisch oder auch Sauerstoff sein, ist aber nicht darauf beschränkt. Solche Anwendungen sind z.B. in den JP-A-2002-273591, JP-A-10-113786, JP-A-11-216589 beschrieben. Alternativ wurde - z.B. in der DE-A-198 58 684 - auch schon vorgeschlagen, das Schneidgas von aussen auf die Schneidoberfläche zu leiten.

Bei allen diesen Anwendungen ist von Nachteil, dass ein hoher Schneidgasverbrauch zu verzeichnen ist, wenn die Materialdicke der zu schneidenden Werkstücke zunimmt. Der Prozessgasverbrauch ist ein wesentlicher Kostenfaktor bei Laserbearbeitungsprozessen, insbesondere beim Laserschneiden von dicken Blechen. Die Reduzierung des Verbrauchs bei gleichbleibend hoher Bearbeitungsqualität ist insbesondere dann von Bedeutung, wenn Gase hoher Reinheit oder Edelgase eingesetzt werden müssen.

Weiterhin ist bei den genannten Anwendungen zu bemängeln, dass der Schneidgasabfluss überwiegend oder zumindest in ganz erheblichem Masse seitlich stattfindet, so dass ein wesentlicher Anteil des Prozessgases nicht effizient in die sich bildende Schnittfuge des Schneidobjektes gelangen kann.

In der EP-A-1 005 945 wird speziell für das Einstechen beim Laserschneiden vorgeschlagen, eine Vorrichtung mit einem kleinen Schablonenloch zu verwenden, wodurch eine Verschmutzung der optischen Komponenten zur Laserstrahlführung und -formung durch rückspritzende Partikel verhindert werden kann und die Bearbeitungszeit für den Prozess des Einstechens verkürzt werden kann. Für einen Laserbearbeitungsprozess wie dem Laserschneiden erscheint diese spezielle Vorrichtung weniger geeignet, weil sie direkt auf dem Werkstück aufsetzt und eine kontinuierliche Bewegung behindert. Diese spezielle Vorrichtung müsste demontiert werden und schränkt den Einsatz der Düse ein.

Im Falle einer Düse, durch die eine grosse Durchflussmenge des Prozessgases für den Laserbearbeitungsprozess geleitet werden muss, wie dies z.B. beim Laserschneiden von dicken Werkstücken auftritt, ist ein möglichst kleiner Düsenabstand vom Schneidobjekt wünschenswert. Damit tritt das Problem auf, dass im Falle von Unebenheiten, insbesondere durch unerwünschte Entstehung von Partikeln während des Einstechens und des Schneidvorganges, die Schneiddüse beschädigt oder in ihrem Fahrweg behindert werden kann. Es wurde bereits vorgeschlagen und eingeführt, durch eine Abstandsregelung den Abstand der Düsenaustrittsöffnung zum Werkstück einzustellen und während des gesamten Bearbeitungsprozesses zu regeln.

Es ist die Aufgabe der Erfindung, eine Laserbearbeitungsdüse bereitzustellen, mit der beim Laserschneiden ein effizienter Schmelzaustrieb aus einer Schnittfuge realisiert werden kann, mit der ein geringerer Schneidgasverbrauch als beim hier angegebenen Stand der Technik notwendig ist und mit der die Qualität der Schnittflächen verbessert wird. Weiterhin ist ein Verfahren zum Laserschneiden mit einer Laserbearbeitungsdüse, insbesondere nach der vorstehend beschriebenen Gattung anzugeben, mit dem ein geringer Schneidgasverbrauch und eine Effizienzsteigerung des Bearbeitungsprozesses hinsichtlich Kostensenkung und Qualitätsverbesserung erzielt werden kann.

Die Erfindung löst die Aufgabe durch eine Einrichtung nach Anspruch 1. Dabei haben die Massnahmen der Erfindung zunächst einmal zur Folge, dass mit einer speziellen Ausführungsform, die Wirksamkeit, der Gasströmung erheblich verbessert werden kann, und dass mit der vorgeschlagenen Bearbeitungsdüse ein kleiner Abstand zu dem zu bearbeitenden Werkstück eingestellt werden kann, so dass der Schneidgasverbrauch erheblich vermindert werden kann. Weiterhin haben die Massnahmen der Erfindung zur Folge, dass das ausströmende Prozessgas effizient zum Austreiben restlicher Schmelze genutzt wird und eine Verschmutzung oder Beschädigung durch im Bearbeitungsprozess entstehende Partikel verhindert wird.

Mit der Minimierung des Abstandes der Bearbeitungsdüse und der gleichzeitigen Abgrenzung der Umgebung durch die Verwendung einer Düsenhülse gemäss Anspruch 1 wird das seitliche Wegströmen des Prozessgases stark begrenzt und minimiert, in bestimmten Fällen sogar nahezu verhindert. Der Gasstrom wird optimal in die sich bildende Bearbeitungsfuge geführt. Das freie Volumen zwischen Düsenkörper und Düsenhülse ist während des Bearbeitungsprozesses mit dem Prozessgas gefüllt.

Die Verbesserung der Prozessgasströmung wurde beim Laserschneiden experimentell beobachtet. Es wurde gefunden, dass insbesondere eine verbesserte Gasströmung entlang des gesamten Schnittspaltes über die gesamte Werkstückdicke, einhergehend mit höheren Strömungsgeschwindigkeiten- insbesondere im unteren Bereich des zu bearbeitenden Werkstückes - hier eines Bleches - zu verzeichnen ist.

Ein weiterer Vorteil der Erfindung gemäss Anspruch 1 besteht bei einer bevorzugten Ausführungsform darin, dass bei äusserer Verschmutzung der Düsenhülse nur diese ausgewechselt werden muss. Die einfache Form der Düsenhülse führt zu geringeren Fertigungskosten im Vergleich zu einem auswechselbaren Düsenkörper.

Vorteilhaft ist ein Laserbearbeitungsverfahren nach dem unabhängigen Verfahrensanspruch gemäss Anspruch 17, bei dem ein Polster erzeugt wird, das aus dem ausströmenden Prozessgas zwischen Düsenkörperaustrittsöffnung 1a, Düsenhülse 3 und dem zu bearbeitenden Werkstück 5 gebildet wird.

Weitere vorteilhafte Einzelheiten der Erfindung sind in den abhängigen Ansprüchen dargelegt.

Die vorgenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnungen, in denen - beispielhaft - eine Bearbeitungsdüse und ein - vorzugsweise entsprechendes Verfahren zur vorliegenden Erfindung erläutert wird.

Die Zeichnungen zeigen Schnittbilder:

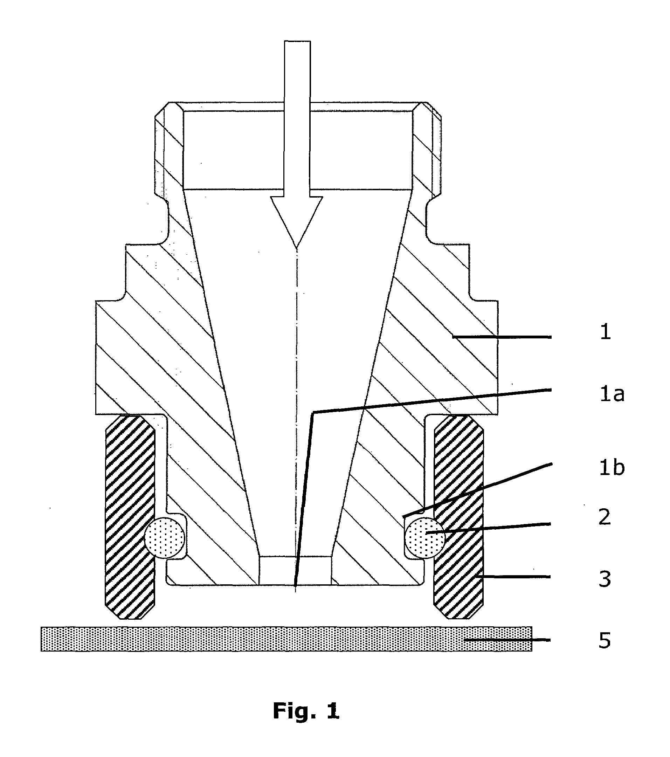

- Fig. 1: einer Bearbeitungsdüse in Seitenansicht nach einer Ausführungsform mit einem Halterungs- und Dichtungsmittel in Form eines Dichtungsringes eingelassen in einer im Düsenkörper eingebrachten Nut zur Positionierung einer Düsenhülse auf dem Düsenkörper;

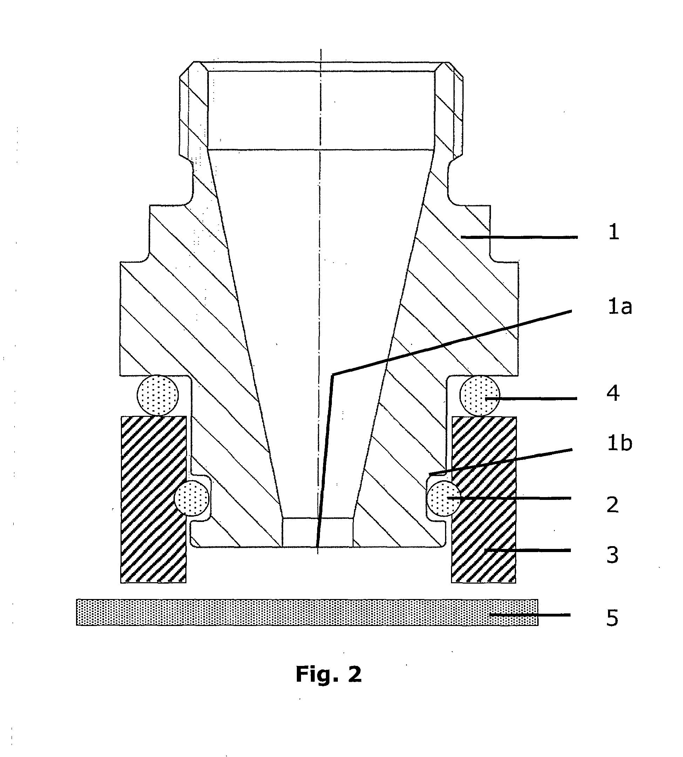

- Fig. 2: einer Bearbeitungsdüse in Seitenansicht nach einer zweiten Ausführungsform der vorliegenden Erfindung mit einem oberhalb der Düsenhülse angebrachten Po- sitionierungsteil zur Halterung und Positionierung der Düsenhülse bezüglich der Düsenkörperaustrittsöffnung und einem seitlich zwischen Düsenhülse und im Düsenkörper eingelassenen Nut positionierten Dichtungsmittel;

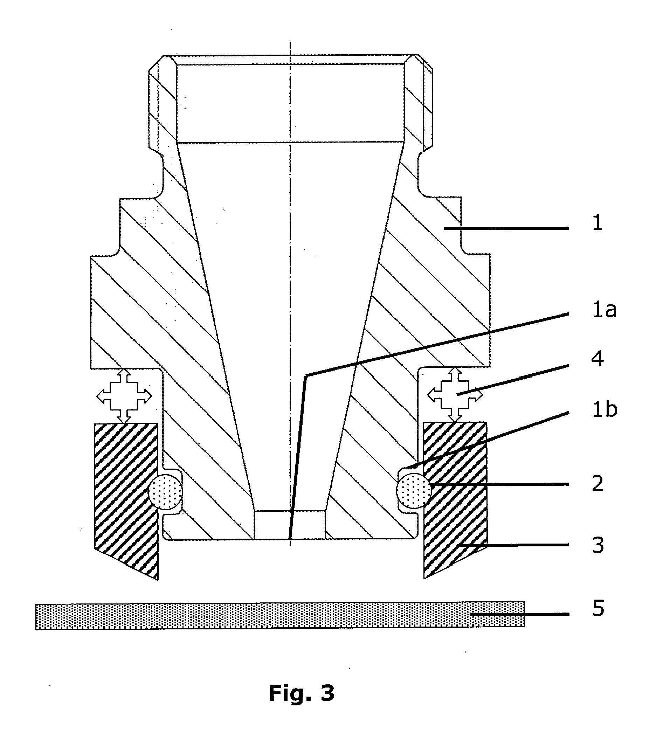

- Fig. 3: einer Bearbeitungsdüse in Seitenansicht nach einer dritten Ausführungsform der vorliegenden Erfindung mit einem seitlich zwischen Düsenhülse und Düsenkörper angebrachten Dichtungsmittel und einem Positionierungsteil, das in seiner mechanischen Ausführung zur Positionierung der Düsenhülse relativ zur Düsenkörperöffnung in Form einer variablen Positionierung als Klemm-, Spannring oder als Tellerfeder oder Spirale ausgeführt sein kann;

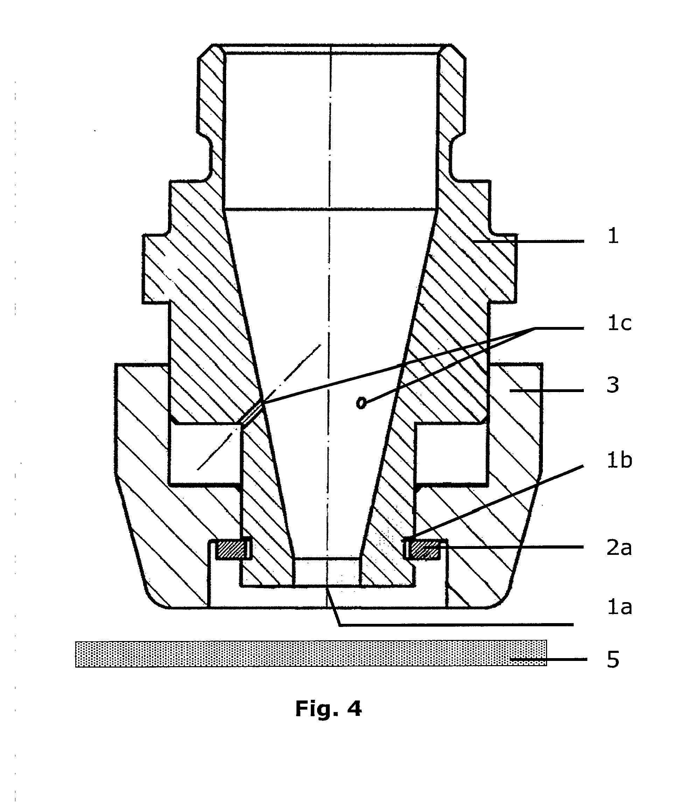

- Fig. 4: einer Bearbeitungsdüse in Seitenansicht nach einer vierten Ausführungsform der vorliegenden Erfindung mit einem Düsenkörper, in den ein oder mehrere Bohrungen eingebracht wurden, durch die Prozessgas strömen kann, mit einer Nut in die ein Positionierungsteil in Form eines Ringes aufgenommen wird, das als unterer Anschlag für die axial in Richtung des zu bearbeitenden Werkstückes verschiebbare Düsenhülse wirkt;

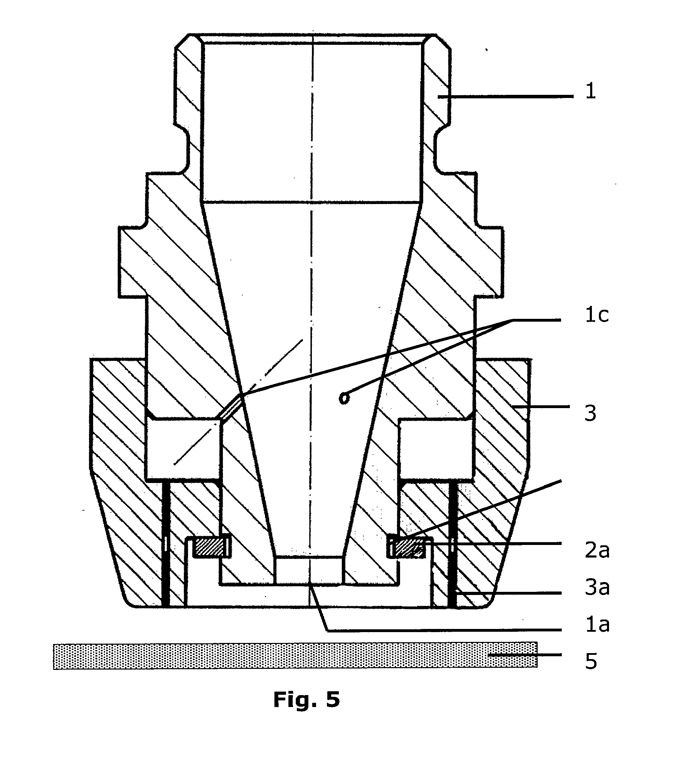

- Fig. 5: einer Bearbeitungsdüse in Seitenansicht nach einer fünften Ausführungsform mit einem Düsenkörper, in dem sich ein oder mehrere Löcher befinden, mit einem seitlichen Halterungs- und Positionierungsteil zwischen Düsenkörper und Düsenhülse und in der Düsenhülse ausgebildeten weiteren Gasführungsmitteln wie zum Beispiel Bohrungen oder Gaskanälen.

Bei der in Figur 1 dargestellten Bearbeitungsdüse ist der Düsenkörper 1 im unteren Bereich mit einer rotationssymmetrischen Düsenhülse 3 überzogen. Die Düsenhülse 3 ragt dabei über die Austrittöffnung des Düsenkörpers 1 hinaus. Im vorliegenden Ausführungsbeispiel ist die innere Geometrie des Düsenkörper 1 in Nähe der Düsenkörperaustrittsöffnung 1a zylindrisch und im sich anschliessenden Bereich konvergent ausgebildet. In Fig. 1 ist eine Halterung und Positionierung der Düsenhülse mit einem Dichtungsmittel 2 in Form eines Dichtungsringes gezeigt, wobei dieser sich in einer im Düsenkörper eingebracht Nut 1b befindet.

Die Düsenhülse 3 ist mit Hilfe eines Dichtungsmittels 2 zentriert und relativ zur Düsenkörperaustrittsöffnung 1a positioniert. Die vertikale Positionierung der Düsenhülse relativ zum Düsenkörper kann ebenso über das Einbringen einer Nut in der Düsenhülse und mit einem Dichtungsring oder andere bereits bekannte Dichtungsarten erfolgen, wie sie zum Beispiel aus der Vakuumtechnik bekannt sind. Die Verbindung zwischen Düsenkörper und Düsenhülse sollte sowohl einen einfachen Wechsel der Düsenhülse gestatten als auch ein Abgleiten der Düsenhülse vom Düsenkörper während des Bearbeitungsprozesse bei hohen Beschleunigungen und das unerwünscht Ausströmen des Prozessgases in eine andere als die dem Werkstück zugewandten Richtung verhindern.

Düsenkörper 1 und Düsenhülse 3 bilden einen Hohlraum aus, der zusammen mit dem zu bearbeitenden Werkstück 5 mit dem ausströmenden Prozessgas gefüllt wird. Das Volumen des Hohlraumes kann sehr klein sein. In diesen Raum wird bei der Bearbeitung durch die Düsenaustrittsöffnung sowohl ein Laserstrahl, im Ausführungsbeispiel ein Laserstrahl eines CO₂-Lasers als auch ein Prozessgas, im Ausführungsbeispiel Stickstoff als Schneidgas, geleitet.

In dem Ausführungsbeispiel des Laserschneidens wird zur Regelung des Abstandes der Düsenaustrittsöffnung einer Bearbeitungsdüse und einem Werkstück oft eine kapazitiven Abtastung und Regelung verwendet. Es sollte aber betont werden, dass andere Abstandsreglungen oder keine Abstandsreglung (während des Bearbeitungsprozesses konstanter Abstand) bei der Verwendung einer Bearbeitungsdüse zur Laserbearbeitung eines Werkstückes eingesetzt werden können.

Die hier beschriebene Auslegung der Düsenhülse 3 ist sowohl für Keramiken als auch für metallische Werkstoffe geeignet. Entsprechend ist die Regelungs- und Steuereinrichtung auszulegen, mit der eine Kollision der Düsenhülse 3 mit aufliegenden oder während des Bearbeitungsprozesses entstehenden Spritzern, aufstehenden, geschnittenen Teilen aus dem Werkstück und anderen Hindernissen verhindert wird.

Die in Figur 2 gezeigte Bearbeitungsdüse unterscheidet sich von der vorstehend beschriebenen Düse dadurch, dass ein weiteres Positionierungsteil 4, in der Ausführung wie ein Klemm- oder Dichtungsring als Positionierung oder/und Halterung der Düsenhülse koaxial zum Laserstrahl und relativ zur Düsenkörperaustrittsöffnung dient. Die innere Geometrie des Düsenkörpers ist durch eine konvergente Form gekennzeichnet.

Die in Figur 3 abgebildete Variante der Bearbeitungsdüse ist durch eine aussen angefaste Geometrie der Düsenhülse 3 gekennzeichnet. Die innere Geometrie des Düsenkörpers 1 ist im Bereich der Düsenaustrittsöffnung 1a zylindrisch ausgebildet. Im angrenzenden mittleren Teil des Düsenkörpers ist eine konvergente Geometrie ausgebildet. Das Positionierungsteil 4 oberhalb der Düsenhülse ist dadurch gekennzeichnet, dass eine radiale und/oder vertikale Beweglichkeit der mechanischen Halterung gegeben ist, wie sie zum Beispiel durch die Verwendung einer Tellerfeder, einer Spirale oder Spann-, Klemmringes realisiert werden kann.

Die innere Geometrie des Düsenkörpers kann in verschiedenen Ausführungen erfolgen. Die Formen des Düsenkörpers können sowohl einteilige Ausführungen zylindrisch, konvergent, divergent und ihrer Kombinationen sein als auch mehrteilige Ausführungen in Form von Doppeldüsen oder Ringdüsen.

Die Merkmale der Figuren 1, 2 und 3 können frei miteinander kombiniert werden.

In Figur 4 ist eine Bearbeitungsdüse in einer Seitenansicht dargestellt, die sich von der Düse aus Figur 1 dadurch unterscheidet, dass die Düsenhülse axial verschiebbar ausgebildet ist, wobei ein in eine Nut 1b im Düsenkörper 1 eingelassenes Positionierungsteil 2a, wie zum Beispiel ein Klemmring, das Abgleiten der Düsenhülse vom Düsenkörper verhindert. Die Düsenhülse 3 ist nach oben durch eine Auskragung des Düsenkörpers 1 und nach unten durch das Positionierungsteil 2a in seiner axialen Bewegungsfreiheit begrenzt. In diesem Ausführungsbeispiel wird die axiale Bewegung der Düsenhülse mit Hilfe der Wirkung eines durch eine oder mehrere Bohrungen 1c vom Hauptgasstrom abgeleiteten Gasdruckes relativ zum Düsenkörper geregelt. Im vorliegenden Fall kann also der Düsenkörper 1 in einen festen Abstand zum Werkstück gehalten bzw. mit einer Abstandsregelung gesteuert und geregelt werden. Der Abstand der Düsenhülse 3 relativ zur Düsenkörperaustrittsöffnung wird über den Schneidgasdruck, die Anzahl eingebrachter Löcher im Düsenkörper 1c, entsprechend der inneren Geometrie des Düsenkörpers 1, der äusseren Geometrie des unteren Bereiches des Düsenkörpers in Nähe der Düsenkörperaustrittsöffnung, und der inneren Geometrie der Düsenhülse 3 eingestellt. Damit kann auch das Volumen des ausgebildeten Stauraumes unterhalb der Düsenaustrittsöffnung des Düsenkörpers variiert werden.

Die in Figur 5 dargestellte Bearbeitungsdüse unterscheidet sich von der Düse in Figur 4 dadurch, dass in die Düsenhülse 3 zusätzliche Gasführungsmittel in Form von Bohrungen oder Kanälen 3a eingebracht wurden, die zur Ausbildung eines Gasstromes führen, der ringförmig den aus dem Düsenkörper ausströmenden Hauptgasstrom umschliesst. Dadurch wird auf der Werkstückoberfläche eine zusätzliche Gasströmung beaufschlagt, der den Hauptstrahl ringförmig umschliesst.

Die Merkmale der Figuren 4 und 5 können frei mit den geometrischen und technischen Merkmalen der vorstehend beschriebenen Ausführung nach Figur 1 bis 3 miteinander kombinieren werden.

### Bezugszeichenliste

- 1: Düsenkörper
- 1a: Düsenkörperaustrittsöffnung
- 1b: Nut
- 1c: Düsenkörperbohrung
- 2: Dichtungs- und Halterungsmittel
- 2a: Positionierungsteil (z.B. Klemm- oder Sichelring)
- 3: Düsenhülse
- 3a: Gasführungsmittel (z.B. Bohrung)
- 4: Positionierungsteil
- 5: zu bearbeitendes Werkstück

## Patentansprüche

1. Bearbeitungsdüse für eine Laserbearbeitungsmaschine, insbesondere für eine Laserschneidmaschine, mit einer zumindest über einen Teilbereich im Innern konvergenten Geometrie, wobei die Bearbeitungsdüse so ausgebildet ist, dass ein Laserstrahl koaxial zu einem Prozessgas eingeleitet werden kann und im Bereich des Düsenkörpers (1) auf das zu bearbeitende Werkstück (5) gerichtet werden kann,
**gekennzeichnet durch**
- eine auf einem Düsenkörper (1) aufgesetzte Düsenhülse (3),
- wobei die Düsenhülse (3) über den Düsenkörper (1) hinausragt und
- zusammen mit Düsenkörper (1) einen halboffenen Raum ausbildet, der **durch** ein Werkstück (5) geschlossen oder nahezu geschlossen werden kann.

2. Bearbeitungsdüse nach Anspruch 1, **dadurch gekennzeichnet, dass** der Düsenkörper (1) einschliesslich der Düsenhülse (3) in der äusseren Form im wesentlichen rotationssymmetrisch ausgebildet ist.

3. Bearbeitungsdüse nach Anspruch 1 oder 2, **dadurch gekennzeichnet, dass** für die innere Geometrie des Düsenkörpers (1) verschiedene Formen wie zum Beispiel konvergent, zylindrisch, divergent, ihre Kombinationen und mehrteilige Formen wie Doppeldüsen oder Ringdüsen möglich sind.

4. Bearbeitungsdüse nach einem der vorstehenden Ansprüche, **dadurch gekennzeichnet, dass** der Düsenkörper (1) fest mit einem Bearbeitungskopf verbindbar ist, in dem auch Elemente der Laserstrahlformung insbesondere der notwendigen Fokussieroptik untergebracht sein können.

5. Bearbeitungsdüse nach einem der vorstehenden Ansprüche, **dadurch gekennzeichnet, dass** die Düsenhülse (3) über einen unteren Teilbereich des Düsenkörpers (1) geschoben wird.

6. Bearbeitungsdüse nach einem der vorstehenden Ansprüche, **dadurch gekennzeichnet, dass** zwischen der Düsenhülse (3) und dem unteren Teilbereich des Düsenkörpers (1) eine Halterung und Positionierung erfolgt, die mittels eines Dichtungsmittels (2), das in eine im Düsenkörper (1) eingebrachte Nut (1b) gelegt wird, mittels einer Dichtung oder mit einem gleichwirkenden Mittel erfolgt, wobei die Düsenhülse (3) koaxial mit dem Düsenkörper (1) angeordnet und verbunden ist.

7. Bearbeitungsdüse nach Anspruch 6, **dadurch gekennzeichnet, dass** das Dichtungsmittel (2) eine Reduzierung der Prozessgasströmung in eine andere als die dem Werkstück (5) zugewandten Richtung verhindert.

8. Bearbeitungsdüse nach Anspruch 6 oder 7, **dadurch gekennzeichnet ist, dass** die Positionierung, Halterung und Dichtung durch das Einbringen eines Dichtungsmittels (2) mit dem Anbringen einer Nut so erfolgen kann, dass sowohl auf Seiten des Düsenkörpers (1) oder auch auf Seiten der Düsenhülse (3) oder beidseitig eine Nut angebracht werden kann.

9. Bearbeitungsdüse nach einem der Ansprüche 5 bis 8, **dadurch gekennzeichnet, dass** zwischen der Düsenhülse (3) und dem unteren Teilbereich des Düsenkörper (1) eine weiteres Positionierungsteil (4), ein Klemmring, Teller-, Spiralfeder oder ein gleichwirkendes Mittel angeordnet ist, so dass die Düsenhülse (3) axial zu dem Düsenkörper (1) verschiebbar angeordnet ist.

10. Bearbeitungsdüse nach einem der Ansprüche 1 bis 9, **dadurch gekennzeichnet, dass** der Düsenkörper (1) eine radiale Auskragung aufweist, die als obere Anschlagfläche für die Düsenhülse (3) ausgebildet ist und ein Positionierungsteil (2a) am unteren Bereich des Düsenkörpers nahe der Düsenkörperaustrittöffnung (1a) vorhanden ist, das als Anschlagfläche in Richtung des zu bearbeitenden Werkstückes (5) dient, so dass die vertikale Bewegung durch Verschiebung der Düsenhülse relativ zur Düsenkörperaustrittsöffnung (1a) in ihrer Ausdehnung begrenzt wird.

11. Bearbeitungsdüsen nach Anspruch 9 oder Anspruch 10, **dadurch gekennzeichnet, dass** zwischen der Düsenhülse (3) und dem Düsenkörper (1) ein mechanisches Positionierungsmittel (4) und/oder ein Halterung- oder Dichtungsmittel (2 oder 2a) derart ausgebildet ist, dass eine axiale Verschiebbarkeit der Düsenhülse zum Düsenkörper derart möglich ist, dass die relative Position zwischen Düsenkörperaustrittsöffnung (1a) und untere Kante der Düsenhülse einstellbar ist.

12. Bearbeitungsdüse nach einem der vorstehenden Ansprüche, **gekennzeichnet durch** ein Gasleitungsmittel (1c) vom Düsenkörper (1) in den Bereich, der zwischen dem Düsenkörper (1) und der Düsenhülse (3) gebildet wird.

13. Bearbeitungsdüse nach Anspruch 12, **dadurch gekennzeichnet, dass** die Düsenhülse (3) durch eine Veränderung des durch das Gasleitungsmittel (1c) wirkenden Gasdrucks axial in Richtung des zu bearbeitenden Werkstückes verschoben werden kann.

14. Bearbeitungsdüse nach einem der vorstehenden Ansprüche, **dadurch gekennzeichnet, dass** in der dem zu bearbeitenden Werkstück (5) zugewandten Seite der Düsenhülse (3) Gasdüsenöffnungen, Kanäle oder Löcher (3a) ausgebildet sind, durch die ein Prozessgas, wie zum Beispiel ein Schneidgas geleitet werden kann.

15. Laserbearbeitungsvorrichtung, insbesondere Laserschneidmaschine, mit einer Bearbeitungsdüse nach einem der vorstehenden Ansprüche, **gekennzeichnet durch** eine Abtasteinrichtung zum Detektieren des Abstandes zwischen der Düsenkörperaustrittsöffnung (1a) und/oder der Düsenhülse (3) und dem zu bearbeitenden Werkstück (5), und einer Regelungseinrichtung zur axialen Verschiebung des Düsenkörpers (1) und/oder der Düsenhülse (3) **gekennzeichnet durch** eine Abhängigkeit einer physikalischen Grösse als Funktion des Abstandes der Düsenhülse (3) zum zu bearbeitenden Werkstück (5).

16. Laserbearbeitungsvorrichtung nach Anspruch 15, **dadurch gekennzeichnet, dass** der durch die Gasleitungsmittel (1c) wirkende Gasdruck aus dem Düsenkörper und/oder der durch Gasdüsenlöcher der Düsenhülse (3a) wirkende Gasdruck bzw. Gasfluss zur Regelung der Position der Düsenhülse (3) relativ zur Düsenkörperaustrittsöffnung (1a) und zum Werkstück (5) verwendet wird.

17. Verfahren zum Bearbeiten eines Werkstückes mit einer Laserbearbeitungsvorrichtung, insbesondere mit einer Laserschneidvorrichtung nach Anspruch 15 oder 16, **gekennzeichnet durch** die Schritte
- Annähern einer einen Düsenkörper (1) und eine Düsenhülse (3) aufweisende Bearbeitungsdüse, insbesondere nach einem der Ansprüche 1 bis 14, an ein Werkstück (5),
- Bearbeiten des Werkstückes (5) mit einem **durch** die Bearbeitungsdüse geleiteten Laserstrahl,
- Beaufschlagen des Werkstückes (5) mit einem **durch** die Bearbeitungsdüse geleiteten Bearbeitungsgases, insbesondere eines Prozess-, oder Schneidgases,
- wobei der Düsenkörper (1), die Düsenhülse (3) und das Werkstück (5) einen nahezu geschlossenes Volumen ausbilden, das mit Prozessgas gefüllt wird, soweit das zu bearbeitende Werkstück (5) in diesem Bereich geschlossen ist.

18. Verfahren zum Bearbeiten eines Werkstückes nach Anspruch 16 oder 17, **gekennzeichnet durch** ein Steuern oder Regeln des Abstandes der Düsenhülse (3) oder/und des Düsenkörpers (1) vom Werkstück (5), wobei die Gasströmung als Einstellung und Regelung des Abstandes zum Werkstück (5) verwendet wird.
